# EUROPEAN PATENT APPLICATION

(11) **EP 1 323 971 A1**
(43) Date of publication of application: **02.07.2003**
(21) Application number: 01830794.2
(22) Date of filing: 12.12.2001
(51) Int. Cl.: F16L 21/00, F23J 13/04, F16L 37/252

(54) **Modular tubular element for manufacturing ducts for gases**

(71) Applicant: Franchini, Maria Agnese, 37060 Castel D'azzano (Verona) (IT)
(72) Inventor: Franchini, Maria Agnese, 37060 Castel D'azzano (Verona) (IT)
(74) Representative: Lanzoni, Luciano

(57) **Abstract**

Modular tubular element for manufacturing ducts for gases made of laminar material and having a main body (2), a first male shaped end (3), and at least a second female shaped end (4). A plurality of engagement elements (5) are integrally associated with the surface of one of the ends (3), (4), whilst a plurality of housing seats (6) are fastened to the other one of the ends (4), (3). The seats are able to be coupled each to an engagement element (5) of another modular tubular element (1), and each of them extends on the surface of the related end, and it has at least a first and a second segment (12), (13) developing along helical trajectories that are coaxial to the related end (3), (4). The first end (3) comprises a terminal sealing portion (7) having a first angle of conicity α greater than or equal to zero, and a cylindrical internal latching portion (8) contiguous to the terminal sealing portion (7). The second end (4) comprises a cylindrical terminal latching portion (9), and an internal sealing portion (10) contiguous to the terminal latching portion (9), and conically broadened towards the terminal latching portion (9) according to a second angle of conicity β exceeding the first angle of conicity α. Said engagement elements (5) and the seats (6) are associated to the cylindrical latching portions (8), (9).

## Description

The present invention relates to a modular tubular element for manufacturing ducts for gases of the type comprising the characteristics expressed in the preamble to claim 1.

In the field of conditioning and heating, widespread use is made of ducts for feeding air or expelling the exhaust gases resulting from combustion; such ducts are constituted by a plurality of modular tubular elements made of laminar material (metallic or plastic).

However, the ducts used in heating plants, in particular those destined to the expulsion of combustion exhaust gases, must guarantee, in operation, determined performance levels in terms of gas tightness, resistance to humidity, uniformity of behaviour with temperature variations, and ease of disassembly, as well as fire-retardant capabilities, at least in some applications.

Currently, there are different types of modular elements.

A first type is described in the Patent EP 780 635, and it provides for each tubular element to have a first and a second end (or also more than two in the case of T-shaped junction elements) shaped as cone frustums and with mutually complementary shapes.

In manufacturing the duct, the first end of an element is forcibly inserted in the second end of another element.

This first prior art duct, however, has a series of drawbacks.

In the first place, forcing an element into the other requires to beat on the free end of an element with the risk of warping it.

In the second place, once an element is joined with the other, it is very difficult to detach the two elements to proceed with normal maintenance operations.

Additionally, if this type of ducts is destined to repairing chimneys (as expressly indicated for instance in patent EP 780 635), further problems occur. Tubular elements have to be inserted from the top of the chimney one after the other until covering the whole length of the chimney (with the need to harness them with ropes and then lower them), whereupon the top of the pile has to be hit to force the coupling.

If the number of elements is high, however, it is necessary to apply a very great force in order simultaneously to force all elements to be coupled. Moreover, if while inserting the elements their axes become misaligned, at the time of the forced coupling the junctions obtained will be defective.

If the tubular elements are used with hot fumes (as is the case in chimneys), the various tubular elements are heated and expand (they elongate). At the time of the subsequent cooling, however, two or more elements can uncouple in correspondence with the junctions.

A variation of the first type described above provides for the use of a connecting band that is latched onto appropriate grips obtained on each element, to lock them and assure that the junction has the mechanical strength required in operation.

A further type of duct provides for the use of a band to mutually couple two elements having cylindrical ends; in this case, it is necessary to use a sealing gasket as well, as described, for instance, in the patent WO 93/02313.

Both said solutions which use a connecting band, in addition to having a higher cost of production, entail longer assembly times.

In a different known type of known elements, said element have two (or more) threaded cylindrical ends, shaped in mutually complementary fashion (an example of this type is described in patent application EP 522 410).

Since play between the two threads can be considerable, to guarantee the tightness of the duct a sealing gasket is also provided, integral with an element, against which the other element abuts.

Said gasket can be made of silicone material for ducts destined to be used with moist gases at low temperatures, or of ceramic for dry gases at high temperatures.

This type, however, is also not free of drawbacks.

In particular, it does not guarantee a sufficient seal under all possible conditions of use, and the manufacture of such modular elements is relatively complex because of the presence of a gasket.

Moreover, the gasket mounted on an element is binding for the use of that element, since silicone gaskets cannot withstand high temperatures, whereas ceramic ones cannot withstand moisture.

A further solution is described in US Patent 796,084, and it provides for tubular elements having a cone frustum shaped male end, and a cylindrical female end. The male end has projecting engagement elements, each coupling with an L-shaped seat obtained on the female, in such a way that a mutual rotation between the two elements to be connected causes an axial advancement of the male inside the female, until bringing the edge of the female end in contact with a sealing ring obtained on the male.

A variation, described for instance in US Patent 3,701,548, provides also for the female end to have frustum cone shape and to have a complementary contour to that of the male end with the same angle of conicity.

Both of said solutions, however, are not free of drawbacks.

In the first one, the seal is provided only by the sealing ring, with the consequence that in correspondence with the start of the seats and of any defects of the edge of the female end, the substance present in the duct can escape.

The second one, on the other hand, has the same drawbacks described in relation to the coupling between two cone frustum shaped surfaces whose contours are mutually complementary, so much so, in fact, that US Patent 3,701,548 recognises that in the preferred embodiment it is necessary to use an adhesive material between the two cone frustum surfaces.

Moreover, a drawback shared by all solutions that have two complementary shaped cone frustum surfaces resides in the fact that leaks can take place by capillary action.

Tolerances allowed on the measurements (diameters and conicity) and on the ovalisation of the pipes also entail the risk of imperfect couplings between two cones which in theory have mutually complementary shapes, but in reality are always a little different.

In this situation the technical task set as the basis of the present invention is to obtain a modular tubular element for manufacturing ducts for gases that overcomes the aforesaid drawbacks.

In particular, a technical task of the present invention is to obtain a modular tubular element for the manufacture of ducts for gases that guarantees tightness against gases and moisture and whose performance does not change with operating temperature variations.

A further technical task of the present invention is to obtain a modular tubular element for manufacturing ducts for gases that allows for an easy assembly and disassembly of the duct, whilst guaranteeing the correct alignment between the different elements during the assembly phase.

Yet another technical task of the present invention is to obtain a modular tubular element for manufacturing ducts for gases which does not require the use of connecting bands or gaskets.

The specified technical task and the indicated aims are substantially achieved by a modular tubular element for manufacturing ducts for gases, as described in the accompanying claims.

Further characteristics and advantages of the present invention shall become more readily apparent from the detailed description of a preferred, but not exclusive, embodiment, of a modular tubular element for manufacturing ducts for gases, illustrated in the accompanying drawings, in which:
- Figure 1 shows a lateral view of a tubular element for manufacturing ducts for gases according to the present invention;
- Figure 2 shows a T-shaped tubular element obtained according to the present invention;

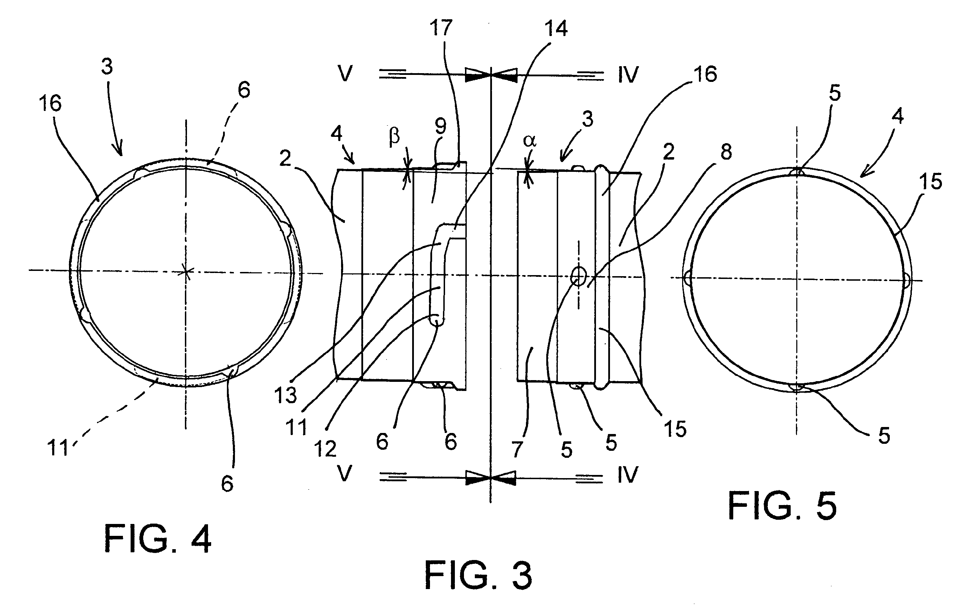

- Figure 3 shows a lateral view of the coupling between two tubular elements obtained according to the present invention;
- Figure 4 shows the tubular element of Figure 1 according to the arrow IV-IV of Figure 3;
- Figure 5 shows the tubular element of Figure 1 according to the arrow V-V of Figure 3.

With reference to the aforesaid figures, the reference number 1 globally indicates a modular tubular element for manufacturing ducts for gases according to the present invention.

The tubular element 1 is made of laminar material, and it has a main body 2, a first male shaped end 3, and at least a second female shaped end 4.

To one of the ends 3, 4 is integrally associated at least an engagement element 5, whilst to the other is integrally associated at least a housing seat 6 able to be coupled to the engagement element 5 of another modular tubular element 1.

Advantageously, each tubular element 1 comprises a plurality of engagement elements 5 and of housing seats 6.

For instance, in the illustrated embodiment, there are four engagement elements 5, associated to the first end 3. Similarly, there are also four housing seats 6, but they are associated to the second end 4.

Preferably, as the diameter of the tubular element 1 grows the number of engagement elements 5 and of housing seats 6 grows. For greater diameters, for instance, even six or eight engagement elements 5 and housing seats 6 are provided.

This cannot, however, be considered a limiting parameter because the engagement elements 5 and the seats 6 may also be associated respectively to the second and to the first end 4, 3.

The engagement elements 5 and the seats 6 are uniformly distributed respectively along a circumference lying in a plane perpendicular to the axis of the first end 3, and on a ring that is coaxial to the second end 4.

The first end 3 comprises a terminal sealing portion 7 which can be either cylindrical (hence with a first angle of conicity α of 0°) or cone frustum shaped (hence with a first angle of conicity α greater than 0° and an internal cylindrical latching portion 8 contiguous to the terminal sealing portion 7.

Similarly, the second end 4 comprises a cylindrical terminal latching portion 9, and an inner sealing portion 10 that is contiguous to the terminal latching portion 9. Said inner sealing portion 10 is conically broadened towards the terminal latching portion 9 with a second angle of conicity β exceeding the first angle of conicity α.

In the preferred embodiment, the second angle of conicity β is in any case smaller than 3°.

In the case illustrated in the accompanying figures by way of example, the second angle of conicity β can be equal to 1 ° whilst the first angle of conicity α can be equal to 0.9°.

According to the present invention, the engagement elements 5 and the seats 6 are associated to the cylindrical latching portions 8, 9 of the related ends 3, 4.

Each housing seat 6 extends on the surface of the related end 4, and it is constituted by a groove 11 having a cross section that is shaped in substantially complementary fashion to the bulk of the engagement elements 5, and extending along a first segment 12 and a second segment 13 that are always present, and along a third segment 14 which in some embodiments may also not be present.

The first and the second segment 12, 13 develop along helical trajectories, coaxial to the related end, whilst the third segment 13 joins an end of the second segment 13 to the edge of the related extremity 4, according to a trajectory which, in the illustrated embodiment, is parallel to the axis of the extremity 4 itself.

The first segment 12 develops along a helical trajectory having lesser inclination than the helical trajectory along which the second segment 13 develops.

The modular tubular element 1 further comprises at least a reinforcement rib 15 constituted by a collar 16 positioned between the first end 3, and the main body 2 of the tubular element 1 itself.

The rib 15, in addition to serving as a reinforcement, also serves as a covering element which, when the duct is assembled, goes to face a flaring 17 obtained in correspondence with the edge of the second end 4, which constitutes an invitation for the first end 3 of another modular tubular element 1.

The presence of the rib 15 further serves to protect the hands of the operators from the edge of the flaring 17 which may be sharp, since it is made of laminar material.

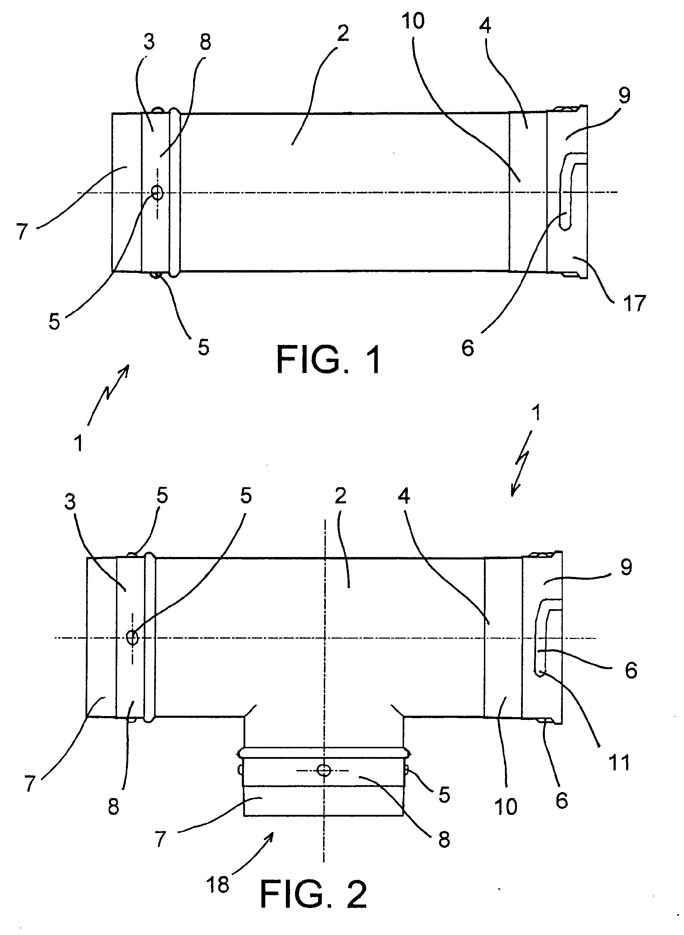

The present invention can also be applied to modular tubular elements having more than two ends 3, 4, such as the T element shown in Figure 2, whereto reference is made for the sake of simplicity.

In this case, different possibilities are provided for the shape of the third end 18 which can be shaped similarly to the first end 3, similarly to the second end 4 or, possibly, also in traditional fashion, if needed for particular requirements. In the embodiment shown in Figure 2, the third end 18 is identical to the first end 3.

The modular tubular elements according to the present invention can be made of any material (metal, plastic or others) depending on the use whereto they are destined.

The manufacture of ducts by means of modular tubular elements in accordance with the present invention is effected by inserting the first end 3 of an element into the second element 4 of another element, taking care to insert the engagement elements 5 in the housing seats 6.

In particular, in the illustrated embodiment, the first end 3 of a modular tubular element 1 is inserted in the second element 4 of another tubular element 1 with a movement according to the direction of development of the third rectilinear segment 14 of the seats 6.

Once the end of the third rectilinear segment 14 is reached, an element 1 is rotated relative to the other in such a way that the engagement elements 5 follow first the second helical segment 13 of the seats 6, then the first segment 12, which is also helical.

The helical shape of these segments 12, 13 of the seats 6 causes a further axial advancement of a tubular element 1 relative to the other, until the two are locked, condition that is obtained when the terminal edge of the terminal sealing portion 7 of the first end 3 interacts with a part of the cone frustum that constitutes the inner sealing portion 10 of the second end 4.

The fundamental purpose of the first segment 12 with reduced inclination is to allow, by means of a small deformation of the tubular elements 1, the rotation of an element relative to the other even after the sealing coupling between the two has been reached.

This solution is particularly useful in the manufacture of flues in buildings with multiple storeys. In this case, at each storey the main flue has a T-shaped element through which the fume duct (sub-horizontal segment) of the storey joins the flue.

Occasionally, in the manufacture of flues with modular element, because of the tolerances of the individual parts, it may transpire that the T-shaped element of a storey is oriented correctly, whilst that of the upper storey is oriented erroneously. At this point, with the tubular elements of the present invention, by forcing the coupling between the different elements interposed between the two T-shaped elements, along the related first segments 12, said orientation errors can be offset.

The present invention achieves important advantages.

In the first place the modular tubular elements obtained in accordance with the present invention, if made with suitable materials, guarantee gas tightness both at high and at low temperatures, as well as in moist or dry conditions.

The modular tubular element for manufacturing ducts for gases of the present invention also assures an easy assembly and disassembly of the product, as well as the correct alignment between the different elements during the assembly phase, easily verifiable, also visually, at the time of coupling.

Additionally, said modular tubular elements does not require the use of gaskets, bands and/or glues, with, as a consequence, smaller warehouse space requirements.

Moreover, the different conicity of the two sealing portions is a determining factor to achieve the tightness of the duct even in the presence of ovalised ducts and/or ducts of different measures (always remaining within the range of allowed tolerances). The insertion of the first end into the second allows to correct any deformations present on said ends.

Moreover, due to the different conicity the seal is guaranteed by the coupling of the terminal edge of the terminal sealing portions with the lateral surface of the inner sealing portion, where practically all the force exerted with the mutual rotation of the tubular elements is concentrated, obtaining a localised pressure far exceeding the one achievable by coupling two surfaces directly.

It should also be noted that the present invention is relatively easy to realise and that the cost connected to its practical realisation is not very high.

The invention thus conceived can be subject to numerous modifications and variations, without thereby departing from the scope of the inventive concept that characterises it.

All components can be replaced with technically equivalent elements and in practice all materials employed, as well as the shapes and dimensions of the various components, may be any depending on requirements.

## Claims

1. Modular tubular element for manufacturing ducts for gases made of a laminar material and having a main body (2), a first male shaped end (3), at least a second, female shaped, end (4), at least an engagement element (5) integrally associated to the surface of one of said ends (3), (4), and at least a housing seat (6) fastened to the other one of said ends (4), (3), and able to be coupled to the engagement element (5) of another modular tubular element (1), said housing seat (6) extending on the surface of the related end, and having at least a first segment (12) developing along a helical trajectory coaxial to the related end (3), (4), **characterised in that**:
said first end (3) comprises a terminal sealing portion (7) having a first angle of conicity α greater than or equal to zero, and a cylindrical internal latching portion (8) contiguous to said terminal sealing portion (7);
said second end (4) comprises a cylindrical terminal latching portion (9), and an internal sealing portion (10) contiguous to said terminal latching portion (9), and conically broadened towards said terminal latching portion (9) according to a second angle of conicity β exceeding said first angle of conicity α;
said engagement element (5) and said seats (6) being associated to the cylindrical latching portions (8), (9).

2. Modular tubular element as claimed in claim 1, **characterised in that** said housing seat (6) further comprises at least a second segment (13) developing along a helical trajectory that is coaxial to the related end (3), (4), and having greater inclination than the helical trajectory along which said first segment (12) develops.

3. Modular tubular element as claimed in claim 1 o 2 **characterised in that** it comprises a plurality of engagement elements (5) uniformly distributed along a circumference lying in a plane perpendicular to the axis of the related latching portion (8), and a plurality of seats (6) uniformly distributed on a ring that is coaxial to the related latching portion (9).

4. Modular tubular element as claimed in claim 1, 2 o 3 **characterised in that** it further comprises at least a reinforcing rib (15) constituted by a collar (16) situated between the first end (3) and the main body (2) of said tubular element (1).

5. Modular tubular element as claimed in any of the previous claims **characterised in that** it further comprises a flaring (17) in correspondence with the edge of the second end (4), to constitute an invitation for the first end (3) of another modular tubular element (1).

6. Modular tubular element as claimed in any of the previous claims **characterised in that** said engagement elements (5) are associated to said first end (3) and said housing seats (6) are associated to said second end (4).

7. Modular tubular element as claimed in any of the claims from 1 through 4 **characterised in that** said engagement elements (5) are associated to said second end (4) and said housing seats (6) are associated to said first end (3).

8. Modular tubular element as claimed in any of the previous claims **characterised in that** it further comprises at least a third end (18).

9. Modular tubular element as claimed in claim 8 **characterised in that** said third end (18) is identical to said first end (3).

10. Modular tubular element as claimed in claim 8 **characterised in that** said third end (18) is identical to said second end (4).

11. Modular tubular element as claimed in any of the previous claims **characterised in that** the second angle of conicity β is smaller than or equal to 3°.

12. Modular tubular element as claimed in any of the previous claims **characterised in that** the second angle of conicity β is 1° and the first angle of conicity α is 0.9°.
